# EUROPEAN PATENT SPECIFICATION

(11) **EP 0 372 860 B1**
(45) Date of publication and mention of the grant of the patent: **31.05.1995**
(21) Application number: 89312572.4
(22) Date of filing: 01.12.1989
(51) Int. Cl.: C09D 5/03

(54) **Coloured powder coating compositions**
Gefärbte Pulver-Beschichtungszusammensetzungen
Compositions de revêtement en poudre colorées

(30) Priority: 02.12.1988 GB 8828225; 30.11.1989 GB 8901432
(43) Date of publication of application: 13.06.1990
(73) Proprietor: COURTAULDS COATINGS (HOLDINGS) LIMITED, London W1A 2BB (GB)
(72) Inventor: Morgan, Andrew Robert, Gateshead Tyne and Wear NE9 5XB (GB); Sinclair-Day, John David, Ryton, Tyne and Wear NE40 4RS (GB); Handyside, Timothy Marc, Jesmond Newcastle-Upon-Tyne NE2 3NS (GB)
(74) Representative: Senior, Janet

(56) References cited:
- DE-A- 2 262 217
- FR-A- 2 202 768
- FR-A- 2 310 394

## Description

This invention relates to coloured powder coatings. Powder coating compositions generally comprise a solid film-forming resin, usually with one or more pigments. They can be thermoplastic but are more usually thermosetting, incorporating two co-reactive film-forming resins or incorporating a curing agent for the film-forming resin in the powder particles. Powder coating compositions are generally prepared by intimately mixing the ingredients, for example in an extruder at a temperature above the softening point of the film-forming resin but below the curing temperature, and comminuting the mixture to the desired particle size. The powder coating is usually applied by electrostatic spray, and the particle size required for most commercial electrostatic spray apparatus is a mean particle size of 15-75 microns, preferably 25-50 microns. In the electrostatic spray process the powder coating particles are electrostatically charged by the spray gun and the substrate is earthed or oppositely charged. The powder coating particles which do not adhere to the substrate can be recovered for re-use so that powder coatings are economical in use of ingredients as well as non-polluting.

Powder coatings form a rapidly growing sector of the coatings market. One disadvantage of powder coating compositions is that it is difficult to produce small batches of any particular shade rapidly. Improvements in pigment dispersion techniques have made available fluid concentrated colour dispersions which can be added to a range of colourless or white paint bases to rapidly prepare liquid paint in any shade desired, avoiding the need for a paint store to keep several different types of paint each in a wide variety of shades. Such concentrated colour dispersions cannot readily be mixed into powder coatings. There is a need for a process whereby powder coatings can be rapidly supplied in a wide variety of shades without the need to store all the different shades.

US-A-384571 (DE-A-2262217) relates to a "metallic glamour" finish applied as a powder coating comprising particles having a particle size distribution from 1 to 75 microns, that is passing 200-mesh U.S. Sieve. The powder coating compositions comprise 95.0 to 99.9% by weight powder particles of at least two different colours capable of adhering to one another to form a continuous film when heated to their melt temperature, and 0.1 to 5.0% by weight reflective flakes. The coloured particles consist of 70 to 99.9% by weight film-forming binder and 0.1 to 30% by weight colorant particles, and are such that when the powder particles are formed into a film about 50 microns thick the film transmits at least 10% of the light of the visible wave length of 4000-7000 Angstroms. The film is not opaque, but translucent, and has a two-tone appearance.

FR-A-2 310 394 describes powder compositions being metal-free and forming coatings having a metallic appearance produced from a mixture of transparent and non-transparent granules containing binder and pigment.

GB 1,383,602 (FR-A-2 202 768) describes a process for producing moulded articles comprising admixing two or more differently coloured, pigmented dry powder blends of polyvinyl chloride and plasticiser, but has no disclosure relating to powder coating compositions.

The present invention provides a coloured powder coating composition consisting of solid particles, characterised in that it is a mixture of particles of at least two different colours and optionally uncoloured particles, each particle comprising a solid polymeric binder system and in the case of coloured particles also at least one colouring agent, the size of substantially all the particles having their largest dimension below 20 microns, such that when the powder coating composition is applied to a substrate and heated to form a continuous coating the differences in colour in the cured powder coating arising from the different coloured particles cannot be discerned by the human eye.

The present invention also provides a process for the preparation of a coloured powder coating composition in a desired colour, characterised by providing powder coating compositions in at least two basic colours, optionally together with an uncoloured powder coating composition, each composition consisting of solid particles and each particle comprising a solid polymeric binder system, the particles of each of the basic colour compositions also containing at least one colouring agent, and wherein substantially all the particles have their maximum dimension below 20 microns, and mixing the powder coating compositions, wherein the particle sizes and proportions of the compositions mixed are such that when applied to a substrate and heated to form a continuous coating a film of the desired colour is formed in which the differences in colour arising from the different particles cannot be discerned by the human eye.

Thus in one embodiment of the process according to the invention, a coloured powder coating composition in a desired colour is prepared by providing powder coating compositions in at least two basic colours, optionally together with an uncoloured powder coating composition, each composition consisting of solid particles and each particle comprising a solid polymeric binder system, the particles of the basic colour compositions also containing a colouring agent, and the compositions having a particle size such that the maximum dimension of at least 99% by weight of the particles is in the range 0.5 to 15 microns, and preferably substantially all the particles have their largest dimension below 10 microns, and mixing the powder coating compositions in proportions selected to give a coloured powder coating composition which when applied to a substrate and heated to form a continuous coating forms a film of the desired colour.

For example, the process according to the invention for the preparation of a coloured powder coating composition in a desired colour may comprise providing the said powder coating compositions in at least two basic colours, optionally with the said uncoloured powder coating composition, comminuting the compositions to a particle size such that substantially all the particles have their largest dimension below 10 microns and simultaneously mixing them in proportions selected to give a coloured powder coating composition which when applied to a substrate and heated to form a continuous coating forms a film of the desired colour.

The particles of the coloured powder coating composition are preferably agglomerated after mixing to produce composite particles of a particle size suitable for electrostatic spraying of the powder coating, generally a mean particle size of 15-75 microns and preferably 25-50 microns. Powder coating compositions of particle size less than 15 microns are not readily fluidised, and in particular are not fluidised by commercial electrostatic spray apparatus.

The present invention also provides a process for powder coating a substrate, characterised in that an agglomerated composition of the invention is applied to the substrate and heated to form a continuous coating, and a substrate coated by such process.

Figure 1 of the accompanying drawings is a diagrammatic section of an apparatus for producing colour powder coating compositions by dispersion and spray drying.

Figure 2 is a diagrammatic section of an apparatus for mixing basic colour powder coating compositions by electrostatic mixing.

Figure 3 is a diagrammatic section of an alternative apparatus for mixing basic colour powder coating compositions by electrostatic mixing.

Figure 4 is a diagrammatic section of a mixer for mechanically mixing basic colour powder coating compositions.

Figure 5 is a diagrammatic longitudinal section of an alternative mixer for mechanically mixing basic colour powder coating compositions.

Figure 6 is a diagrammatic cross-section of the mixer of Figure 5 adapted to carry out granulation after mixing.

Figure 7 is a diagrammatic cross-section of an apparatus for mixing and/or granulating basic colour powder coating compositions.

We have found that when a powder coating consisting of different coloured particles is applied to a substrate, each particle retains distinct boundaries even after application to a substrate and heating to form a film. When the largest dimension of the particles of the powder coating composition is below a critical size, often about 10 microns, the differences in colour in the cured powder coating arising from the different coloured particles cannot be discerned by the eye, so that the powder coating is perceived to have a uniform colour. This critical size is dependent on a number of factors, including the contrast in hue and luminance between the different coloured particles and the ratio of the different coloured particles. Luminance is somewhat more important than hue, so that the critical size is lower for a mixture of black and white particles than for a mixture of different coloured particles of similar luminance. For any pair of coloured powders the critical size is lowest for a 1:1 mixture. The critical size is also very dependent on the nature (randomness) of mixing.

The coating compositions according to the invention may be mixtures of two or more basic colour powder coating compositions, optionally with an uncoloured powder coating composition. Usually at least the majority of the particles in the composition contain at least one colouring agent. The particle size of the basic colour powder coating compositions (and the optional uncoloured composition) is preferably in the range 0.5 - 15 microns, with the maximum dimension of at least 99% by weight of the particles preferably being in this size range. More preferably, all the particles have a maximum dimension of 10 microns or below. A mean particle size of 1.5 - 4 microns is most preferred.

The individual particles of such a basic colour powder coating composition each contain the main ingredients of the powder coating, that is the solid polymeric binder system comprising a film-forming resin and any curing agent required therefor and the colouring agent or agents (pigments and/or dyes) required to give the basic colour. The film-forming resin can be a thermosetting resin or a thermoplastic resin. When a thermosetting resin is used, the solid polymeric binder system generally includes a solid curing agent for the thermosetting resin; alternatively two co-reactive film-forming thermosetting resins can be used.

The present invention also provides a component of a powder coating composition mixture of the invention, which consists of particles of the same colour, for use in powder coating.

The basic colour powder coating compositions used to form the mixtures should have similar melting point, melt viscosity, surface tension and other rheological properties to one another so that they flow and level to the same extent when the powder coating is applied to a substrate. All the basic colour powder coating compositions are preferably based on the same binder system; generally they will be of similar composition except for the pigmentation.

The number of basic colours used will usually be in the range 3 to 10; for example, red, yellow, blue, white and black can be used, optionally with an unpigmented powder coating composition of the same particle size. Examples of pigments which can be used in the basic colour powder coating compositions are inorganic pigments, such as titanium dioxide white, red and yellow iron oxides, scarlet chrome and chrome yellow, and carbon black, and organic pigments such as phthalocyanine, azo, anthraquinone, thioindigo, isodibenzanthrone, triphendioxane or quinacridone pigments, vat dye pigments or lakes of acid, basic or mordant dyestuffs. Dyes can be used instead of or as well as pigments; for example 5 basic colour powder coating compositions can be used, comprising compositions dyed cyan, magenta and yellow, and black and white pigmented compositions. Each basic colour powder coating composition can contain a single colorant (pigment or dye) or can contain more than one colorant. It may for example be desirable to include a grey basic colour powder coating composition to avoid the very low particle sizes needed for mixtures of black and white powder, and/or a green powder composition to avoid the very low particle sizes needed for mixtures of blue and yellow. If there is a large demand for off-white shades it may be preferred for economic reasons to include a white basic colour powder coating composition of relatively large particle size, for example 5 to 15 microns.

The powder coating composition can for example be based on a solid polymeric binder system comprising a carboxy-functional polyester film-forming resin used with an epoxy-functional curing agent such as an epoxy resin, for example a condensed glycidyl ether of bisphenol A, or a low molecular weight tri-functional epoxy compound such as triglycidyl isocyanurate, or with a beta-hydroxyalkylamide; or a hydroxy-functional polyester used with an isocyanate-functional curing agent; or an epoxy resin used with an amine-functional curing agent such as dicyandiamide; or a functional acrylic resin, for example a carboxy-, hydroxy- or epoxy-functional resin, used with an appropriate curing agent. The binder can be a thermoplastic resin such as a fluoro-resin, for example polyvinylidene fluoride or an ethylene/tetrafluoroethylene copolymer, or polyphenylene sulphide. Mixtures of binders can be used, for example a carboxy-functional polyester can be used with a carboxy-functional acrylic resin and a curing agent such as a beta-hydroxyalkylamide which serves to cure both polymers. The powder coating composition can contain additives such as a flow-promoting agent, a plasticiser, stabilisers, for example a stabiliser against UV degradation, and/or fillers. All these ingredients are preferably mixed when forming each basic colour powder coating composition.

The basic colour powder coating compositions can be prepared by the methods generally known in the production of powder coatings, but with a final comminution step which produces a low particle size. This comminution is preferably carried out by jet milling in a fluid energy mill. Fluid energy mills function by collision of particles in a high velocity stream of gas, generally air. Particles of diameter less than 5 microns are easily obtained from a feedstock of mean particle size 50 microns. Fluid energy mills have the advantage that the composition is continuously cooled by the gas stream. In an alternative process the composition, preferably at particle size below 500 microns, can be dispersed in a non-solvent for the ingredients of the powder coating composition, for example water, and comminuted by techniques known for wet paint, for example a high speed bead mill or ball mill. Conventional comminuting devices using metal shearing blades are less efficient in producing sub-10 micron particles as it is difficult to prevent fusion of the heat-sensitive powder.

The basic colour powder coating compositions can be mixed by various techniques. A preferred method is dry mixing of the powders in a high-shear mixer. The basic colour powders of particle size below 15 microns, for example 0.5 to 10 microns, behave as cohesive non-aeratable powders. Devices containing a high-shear chopper, for example, produce satisfactory mixtures of substantially all powder coatings of this particle size. High-speed forces may be required to break down unwanted agglomerates of particles formed on storage and handling of the basic colour powder coating compositions.

A simple example of a suitable high-shear mixer is a modification of the type of food mixer known as a liquidiser. An inlet is arranged in the mixing chamber at about the level of the rotating blade. The inlet is for a high-velocity gas stream, preferably air, to ensure that the powder is kept circulating past the blades. Another example of a suitable high-shear mixer is described in GB-A-2132128 in which a disintegrator or chopper rotating about a horizontal axis is positioned above a disc rotating about a vertical axis which acts as the main agitator for the mixer. Mixers of this type are sold by Freund Industrial Co. Ltd..

In further examples of suitable high-speed mixers blades of paddles are mounted in a cylinder to rotate about the axis of the cylinder and to scrape the inner surface of the cylinder so that all the powder being mixed is continuously moved around and along the cylinder. The blades can be in the shape of ploughshares to improve mixing of the powder along the length of the cylinder. Chopper blades are mounted about half way along the cylinder to rotate at right angles to the axis of the cylinder. Such mixers are sold by Lodige-Morton Machines Ltd. as the "Lodige Ploughshare" mixer or by Winkworth Engineering Ltd. under the trade name "RT Mixer".

Alternatively, comminuting and mixing can be carried out simultaneously by feeding a mixture of basic colour powder coating compositions to a comminuting apparatus such as a fluid energy mill, or by feeding such a mixture in aqueous dispersion to a bead mill or ball mill. There may be problems in cleaning the comminuting apparatus used in this process, particularly if using wet grinding.

In an alternative mixing process the basic colour powder coating compositions are mixed by an electrostatic mixing technique. In this process a powder coating composition in a first basic colour is electrically charged and a powder coating composition in a second basic colour is not charged or is charged to a different potential and the powders are mixed. For example, one powdered coating composition can be electrically charged positively and another powdered coating composition can be electrically charged negatively. Since the charged particles combine with oppositely charged particles or uncharged particles preferentially, electrostatic mixing can produce an agglomerated product approaching a perfect mixture rather than a random mixture. Higher particle sizes can be used with electrostatic mixing than with other forms of mixing. Particle sizes of up to 20 microns for the basic colour powder coating compositions can be used, although particle sizes in the range 1.5 to 10 microns are preferred. The charged particles can be allowed to combine freely or can be mixed in a pulsed electric feed. A suitable apparatus for electrostatic mixing of powders is described by C.L. Tucker and N.P. Suh in "Polymer Engineering and Science". October 1976, Vol. 16, at pages 657 to 663.

When three or more basic colour powder coating compositions have to be mixed to form the required shade they are preferably mixed sequentially when electrostatic mixing is used; two of the basic colour powder coating compositions are mixed and the mixture is mixed with the third basic colour powder coating composition in a subsequent electrostatic mixing step. Alternatively, the three or more basic colour powders can be charged to different potentials and combined in one mixing operation. For example, if three powders are to be mixed, one can be charged positively, one negatively and the third can be uncharged.

If the coating composition has been mixed as a dry powder the mixture is preferably treated to form permanent agglomerates so that segregation of the different colour particles does not occur. The particle size of the agglomerated powder coating is preferably large enough that the material is air fluidisable and can be applied to the substrate by conventional electrostatic spray, i.e. in the range 15-100 microns and preferably 25 to 50 microns. This can be achieved in a number of ways.

A preferred process is granulation, in which an added material is used to promote adhesion between the particles. The granulating agent is usually added as a solution. It is important that the solvent does not affect the coating composition. A preferred solvent for the granulating agent is water. The non-volatile constituents in the granulating agent are preferably compatible with the resin in the coating composition. Thus for an acrylic-based powder coating a water-borne acrylic granulating agent can be used, such as Glascol HA2 obtainable from Allied Colloids Ltd. This granulating agent is also suitable for use with thermosetting polyester powder coatings and has the advantage that it acts as a flow aid when the polyester powder coating is applied to a substrate. The granulating agent for an epoxy-based powder coating can for example be water-based epoxy resin. A water-soluble cellulose ether such as that sold under the Trade Mark "Celacol M20P" is an alternative granulating agent for polyester, acrylic or epoxy resins. The granulating agent can be in the form of a latex, for example a vinyl or acrylic polymer latex. Typically, the amount of granulating agent required is less than 15% by weight, for example 1 to 10% by weight, based on non-volatile solids, to agglomerate powder with mean particle size 5 microns to yield a product of mean size 40 microns.

The granulating agent is preferably introduced as a spray into a mobile mixture. It can for example be so introduced into the apparatus of GB-A-2132128, or into a "Lodige Ploughshare" or "Winkworth RT" mixer at a position about half way along the mixing cylinder. When the same machine is used for mixing and agglomerating in this way, dry mixing should be carried out before addition of the granulating agent. The high-shear chopper is generally not used during granulation, or is used at a much reduced speed.

An alternative apparatus which can be used for both mixing and granulating is the "Spectrum" sold by T.K. Fielder and Co. Ltd.. This is of the type having a chopper rotating on a vertical plane above an agitator rotating in a horizontal plane. An aqueous granulating agent can be added after mixing, and the apparatus is equipped with microwave generators of a frequency to heat the water added with the granulating agent, thus drying the granulated product.

In an alternative process for introducing the granulating agent, the granulating agent can be encapsulated in particles of the binder resin. An aqueous solution of the granulating agent can be emulsified in a solution of the binder resin in an organic solvent, for example a solution of a polyether binder resin in a chlorinated hydrocarbon such as chloroform. The emulsion is spray-dried to form capsules of the same particle size as the basic colour powder coating composition, for example 1.5 to 10 microns. These capsules are added to the mixed basic colour powder coating compositions either at the start of mixing or during mixing. The capsules are gradually broken by the shearing forces used in mixing, releasing the granulating agent solution to cause granulation.

The agglomerated mixture is preferably dried before it is discharged from the mixer to prevent undesired subsequent agglomeration. A drying gas, for example dry air at 25-80°C, can be passed through the mixer after the granulating agent has been thoroughly mixed into the powder coating composition. The mixing action is preferably continued during drying. Alternatively, the agglomerated mixture can be dried in a fluidised bed dryer after discharge from the mixer.

An alternative method of agglomeration is to use mechanical forces to bind the particles through a process involving deformation and microwelding of the thermoplastic material. A commercially available device for carrying out such mechanical agglomeration is sold as the Nara hybridisation system and described in EP-A-224659. Another is sold by Hosokawa Micron B.V. as a "mechano-fusion device". A further apparatus suitable for a mechanical agglomeration is a mill having conical and planar dies as described in WO-86/04835.

When the basic colour powder coating compositions are mixed by an electrostatic mixing technique the mixed particles are agglomerated by the attraction of oppositely charged particles. It is, however, generally preferred to supplement this with subsequent more permanent agglomeration, for example by a granulation process or by heat softening.

The basic colour powder coating compositions can alternatively be mixed and agglomerated by dispersing them together in a liquid dispersion medium followed by drying of the dispersion under conditions causing agglomeration. The liquid dispersion medium is preferably a non-solvent for substantially all the ingredients of the powder coating composition. Water is the preferred dispersion medium. It can be used alone or with a surfactant or water-miscible organic liquid such as an alcohol or an ether alcohol.

The mixing apparatus used to form the dispersion can use mechanical means, for example a high speed mixer which employs a rotating toothed disc to generate high shear forces, or can use ultrasonic dispersion as well as or in addition to the mechanical disperser. For example, mixing in a high-speed disperser can be followed by ultrasonic dispersion.

The process used to disperse the composition in the liquid dispersion medium may also serve as the final step in comminuting the particles of the powder coating composition to the desired particle size, e.g. to below 10 microns.

The dispersion produced is fed under pressure to the drying apparatus, for example a spray drying apparatus. Spray drying can be carried out using a conventional atomising spray head, in which case the diameter of the spray head at its narrowest point is preferably 20-500 microns to achieve agglomerated particles of the desired particle size for electrostatic spray, namely 20-50 microns. Spray drying has the advantage that the particle size of the agglomerated powder coating produced can be controlled by the concentration of the dispersion and the diameter of the spray head. The spray can alternatively be a centrifugal spray system, for example a spinning disk spray, or can be an ultrasonic spray. The spray dryer is preferably a co-current dryer in which the direction of the spray is generally downwards and in which a stream of gas, generally air, passes down the drying chamber in the same general direction as the spray. This stream of gas is preferably at ambient temperature or above. The inlet temperature of the gas can, for example, be 40-120°C. The agglomerated powder coating particles produced collect at the bottom of the spray drying chamber and can be removed by a suitable valve system. The vapour of the dispersion medium passes upwards and can be vented. Alternatively, the whole output of the spray dryer can be passed to a cyclone separator to isolate the agglomerated powder coating.

The process of the invention is preferably carried out in conjunction with a data-storage system containing details of the proportions of the basic colour power coating compositions required to make powder coating compositions in different shades, so that for a given shade and size of batch a data processor can calculate the weight of each basic colour powder coating composition to be used. Automatic weighing means can be used if desired. A colour computer can be used if desired to calculate the proportions of basic colour powder coating compositions required to match a sample of a non-standard shade.

The present invention also provides a kit for use in powder coating, comprising powder coating compositions in at least two basic colours, optionally together with an uncoloured powder coating composition, as separate components, each composition consisting of solid particles and each particle comprising a solid polymeric binder system, the particles of the basic colour compositions also containing at least one colouring agent, the compositions being of such a particle size that substantially all the particles have their largest dimension below 20 microns such that if mixed by an electrostatic mixing technique in proportions selected to give a coloured powder coating composition and applied to a substrate and heated to form a continuous coating the differences in colour in the cured powder coating arising from the different particles cannot be discerned by the human eye.

The basic colour powder coating compositions of the invention can be stored, for example, at a particle size below 10 microns, and mixed and agglomerated as required. Alternatively, the basic colour powder coating compositions can be stored at a higher particle size, for example 15-50 microns as conventionally used for coatings, to be comminuted, mixed and agglomerated as required.

The invention will be further described by way of example with reference to the accompanying diagrammatic drawings identified above.

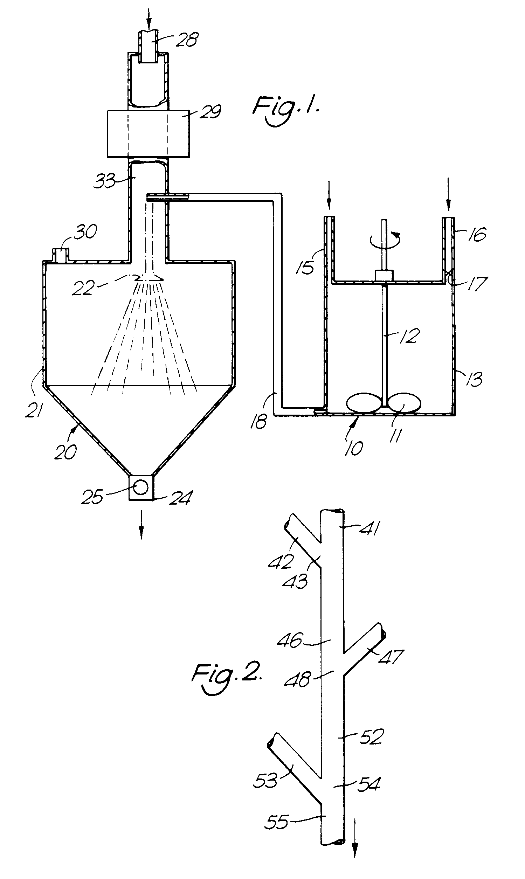

The apparatus of Figure 1 generally comprises a mixer 10 and a spray dryer 20. The mixer 10 is a high speed disperser having an impeller 11 mounted on a shaft 12 within a vessel 13. The vessel 13 has an inlet 15 for the dispersion medium, for example water, and an inlet 16 controlled by a valve 17 for feeding the basic colour powder coating compositions. The powder coating particles are dispersed in the dispersion medium and the dispersion thus formed is pumped through an outlet 18 by a pump 19 to a spray dryer 20.

The spray dryer 20 comprises a vessel 21 containing a downwardly directed atomising spray head 22. The spray dried powder coating particles fall to the bottom of the vessel 21 and are removed through an outlet 24 controlled by a valve 25. The vapour of the dispersion medium which is evaporated passes upwards at the side of the vessel 21 and is vented at 30. Air is fed to the dryer 20 through an inlet 28 and passes in through a heater 29 and down a central duct 33, forming a co-current flow of heated air around the spray head 22.

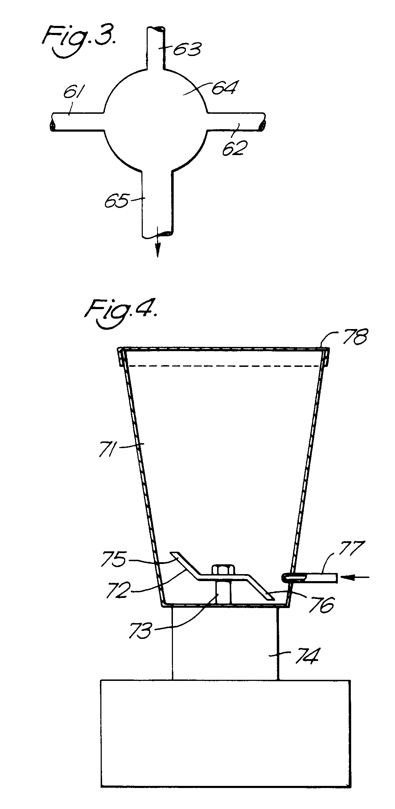

The apparatus of Figure 2 as shown is suitable for mixing four basic colour powder coating compositions in three mixing steps carried out successively. The apparatus can be adapted to include further mixing steps if required. The apparatus comprises an inlet 41 for a first basic colour powder coating composition whose particles have been positively charged, for example using an apparatus similar to that described in "Polymer Engineering & Science", October 1976 at page 658, and an inlet 42 for a second basic colour powder coating composition whose particles have been negatively charged or are uncharged. The inlet 42 can be sleeved with an insulating material designed to impart a charge to the particles by tribocharging. Polytetrafluoroethylene, for example, will induce a negative charge on the particles. The particles mix at the junction 43 of inlets 41 and 42, and the oppositely charged particles combine. The combined particles pass along conduit 46. An inlet 47 for a third basic colour powder coating composition meets conduit 46 at junction 48. The particles of the third basic colour powder coating composition are preferably oppositely charged to whichever of the first and second basic colour powder coating compositions is present at greater weight, or if the second basic colour powder coating composition is uncharged the particles of the third composition can be negatively charged. The combined particles and the particles of the third basic colour powder coating composition combine at junction 48 and pass to conduit 52, where they are combined with particles of a fourth basic colour powder coating composition supplied through inlet 53 meeting conduit 52 at junction 54. The fourth basic colour powder coating composition is charged oppositely to the net charge of the first three basic colour powder coating compositions. The resulting combined particles pass through conduit 55 and can be collected in a suitable container. This may be the package for the final powder coating composition, or it may be preferred to granulate the product to achieve more secure agglomeration.

The apparatus of Figure 3 comprises three inlets 61, 62 and 63 for first, second and third basic colour powder coating compositions. The inlets all feed a mixing chamber 64. The particles of the first basic colour powder coating composition are charged positively; the particles of the second powder coating composition are charged negatively and the particles of the third basic colour powder coating composition are uncharged. The particles combine in mixing chamber 64 and pass to conduit 65, whence they can be collected in a suitable container.

The apparatus of Figure 4 is a modified "Moulinex" (Trade Mark) food blender and comprises a mixing chamber 71 containing a blade 72 extending in two directions and mounted on a spindle 73. The blade can be rotated at high speed by drive motor 74. The blade 72 has a sharp leading edge in the direction of rotation and has an upwardly inclined portion 75 at one side of the blade and a downwardly inclined portion 76 at the other side of the blade. The inclined portions 75 and 76 of the blade 72 are both tapered so that the tips of the blade 72 are sharp points. An inlet 77 for high-velocity air is positioned in the wall of the chamber 71 substantially at the level of the blade 72. The chamber 71 has a cover 78 which retains the powder coating particles but is porous to air. The cover 78 can for example be of sintered thermoplastic material such as polypropylene or of sintered glass. The combined action of rotation of the blade 72 and the high-velocity air keeps all the powder in the mixing chamber 71 in a substantially fluid state and the high shear action of the blade 72 breaks up any powder agglomerates, which tend to fall into the path of rotation of blade 72 because of their greater weight than the non-agglomerated powder particles.

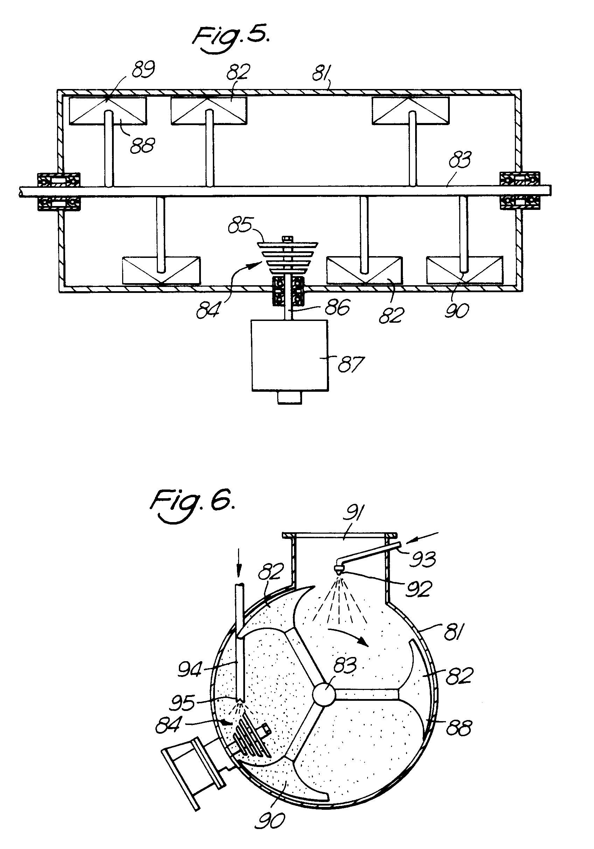

The apparatus of Figure 5 comprises a cylindrical mixing chamber 81 containing blades 82 mounted on a drive shaft 83, which in use is rotated by a motor (not shown). A chopper 84 consisting of a set of cutting blades 85 mounted on a spindle 86 is situated half way along the mixing chamber 81. The spindle 86 is driven by a motor 87 to rotate the cutting blades 85. The blades 82 are shaded with a leading edge 88 tapered in two dimensions to a point 89 to promote mixing of powders along the chamber 81. The trailing edge 90 of the blades 82 is also tapered but not to a point.

The apparatus of Figure 6 is a modification of the apparatus of Figure 5 and the same parts have the same numerals. The apparatus includes two types of inlet for a solution of granulating agent. The mixing chamber 81 is modified to include a top zone 91 within which are located a series of spray heads such as 92 fed by a pipe 93 so that the spray heads 92 are outside the path of rotation of the blades 82. A further inlet 94 is positioned about half way along the mixing chamber 81 and has its outlet 95 adjacent to the blades 85 of chopper 84.

In use the apparatus of Figure 6 is charged with the required amount of basic colour powder coating compositions of particle size below 10 microns and is operated as a dry mixer initially. When sufficient mixing time has elapsed to obtain a random mixture of particles a granulation agent is introduced through inlets 93 and 94 and the mixing action is continued to obtain agglomerated composite particles. After addition of the granulating agent is complete, warm dry air is fed to the mixing chamber 81 through inlets 93 and 94 to gradually dry the powder as it is being agglomerated, limiting the size of the composite particles formed.

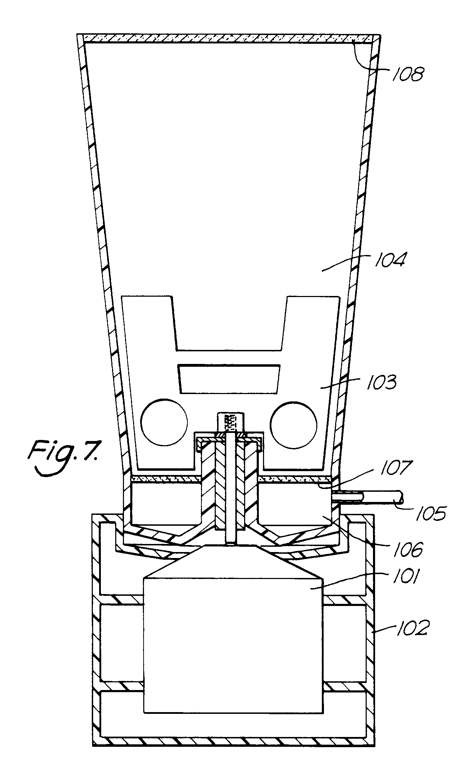

The apparatus of Figure 7 is a modified "Kenwood A516/517" (Trade Mark) food mixer and comprises a motor 101, contained in a housing 102, which drives a stirrer blade 103 within a mixing chamber 104. An air inlet 105 leads to an inlet chamber 106, separated from the mixing chamber 104 by a glass sinter 107. High-velocity air can be fed to the inlet 105 to fluidise the powdered material in the chamber 104 and warm air can be fed to cause drying during granulation. The product is prevented from escaping during mixing or granulation by a second sintered screen 108 which separates product from exhaust air.

The invention is illustrated by the following Examples.

### Examples 1 and 2

White, yellow, blue and black basic colour powder coating compositions were prepared by mixing the following formulations. In each case the ingredients were dry mixed and fed to an extruder blender operating at a temperature of 100°C. The extruder produced a sheet of pigmented resin which was ground to a particle size of below 100 microns, dispersed at 35% by weight in water with 0.1% surfactant and circulated through a high-speed bead mill (Eiger mini mill) at 500 rpm in batches of 100 ml for 30 minutes each. The particle size of the product was all below 10 microns, with the majority of the powder being in the size range 1 to 4 microns. The dispersions produced were dried to form the basic colour powder coating compositions. The fillers, polyester resin curing agent and flow modifiers used were the same in each of the four compositions.

| White Powder Coating Composition | |
|---|---|
| Rutile titanium dioxide white pigment | 250 g |
| Fillers (barytes and talc) | 200 g |
| Carboxylic acid-functional polyester resin | 268 g |
| Epoxy resin curing agent | 268 g |
| Flow modifiers | 14 g |

| Yellow Powder Coating Composition | |
|---|---|
| "Graphitol" yellow pigment | 150 g |
| Titanium dioxide white pigment | 100 g |
| Fillers | 200 g |
| Carboxylic acid-functional polyester resin | 268 g |
| Epoxy resin curing agent | 268 g |
| Flow modifiers | 14 g |

| Blue Powder Coating Composition | |
|---|---|
| "Heliogen" blue pigment | 150 g |
| Titanium dioxide white pigment | 100 g |
| Fillers | 200 g |
| Carboxylic acid-functional polyester resin | 268 g |
| Epoxy resin curing agent | 268 g |
| Flow modifiers | 14 g |

| Black Powder Coating Composition | |
|---|---|
| Black pigment | 30 g |
| Fillers | 200 g |
| Carboxylic acid-functional polyester resin | 377 g |
| Epoxy resin curing agent | 377 g |
| Flow modifiers | 14 g |

For Example 1 50% by weight of the white powder coating composition and 50% by weight of the black powder coating composition were ball milled together at a concentration of 35% by weight in water containing 0.1% surfactant to form a slurry. The slurry was spray dried using an inlet air temperature of 112°C and an exhaust temperature of 50°C.

The spray dried powder was electrostatically sprayed onto steel panels using conventional apparatus for applying powder coatings. The coated steel sheet was stoved at 200°C for 20 minutes. The coating produced appeared to the eye to have a uniform grey colour.

For Example 2 the process of Example 1 was repeated using 56% by weight of the yellow powder coating composition and 44% by weight of the blue powder coating composition in place of the white and black powders. The cured powder coating appeared to the eye to have a uniform green colour.

### Example 3

White and black powder coating compositions having the formulation given in Examples 1 and 2 and of mean particle size 45 microns were each jet milled using a Gueso M100 series Jet Mill at air pressure 800 kpa and powder feed pressure 200 kpa to below 5 microns particle size. The black product had 100% below 4.8 microns and 50% by weight below 2.9 microns. The white product was 100% below 6.2 microns and 99% below 4.8 microns.

50% by weight each of the white and black powders were mixed for 10 minutes in a mixer according to Figure 4. The powders were initially treated in a dry state until well mixed and fluidised. While the mixed powder was in fluidised form, Allied Colloids Glascol HA2 granulating agent (30% solution in water) was added from a spray head. The amount of granulating agent added was 3.0% on a dry weight basis. Mixing was continued at reduced speed for 15 minutes to cause granulation while dry air at 30°C was fed to dry the mixture as it agglomerated. A final high-speed mixing with continued drying for 5 minutes produced an agglomerated grey powder of mean particle size 35 microns with substantially all the particles in the size range 15 to 120 microns.

The agglomerated powder was sprayed on panels and cured as described in Example 1 to produce a coating of uniform grey appearance.

Using the process of Example 3 it has been found that for a 1:1 mixture of black and white particles the critical size is 2.6 microns for a random mixture. If however the mixture is a perfect alternating array of black and white particles the critical size is above 20 microns. The sensitivity of critical size on going to non-perfect mixtures can be accounted for by the statistical probability of the same colour particles lying adjacent to one another.

For random 1:1 mixtures of blue and yellow particles, the critical size is also about 2.5 microns, although this rises to 5.5 microns for 9:1 mixtures of blue and yellow and to 3.3 microns for 1:9 mixtures. For random 1:1 mixtures of red and yellow particles the critical size is 3.5 microns, rising to about 5.0 microns for 9:1 and 1:9 mixtures; mixtures of red and blue particles give similar results. Mixtures of white and yellow particles have a critical size in the range 10 to 15 microns. Mixtures having three or more coloured components generally have a critical size which is similar to or larger than that of mixtures of two of the components.

### Examples 4 and 5

The powder coatings, each based on a carboxy-functional polyester and an epoxy curing agent, sold by International Paint Ltd., under the Trade Marks "Interpon D White Gloss", "Interpon D Gloss Carmine" (red) and "Interpon D Gloss Ultramarine" (blue) were milled in a jet mill to give basic colour powder coating compositions in which all the particles were below 4.8 microns and 50% by weight were below 2.9 microns. For Example 4, 50 g red milled powder and 50 g white were mixed in the apparatus of Figure 4.

100 g of the mixed material was loaded into chamber 104 of the apparatus of Figure 7. Whilst stirring at 300 rpm, 30 g of granulating agent solution (30% solids Glascol HA2) was introduced into the chamber 104 as a fine spray over 10 minutes. Mixing was maintained at a motor speed of 300 rpm while drying the product by passing dry air at 50°C into inlet chamber 106. After 1 hour a dry free-flowing pink powder was formed. This was found to have a particle size distribution in which 50% by weight was below 48 microns, 90% by weight was below 108 microns and 94% by weight was above 15 microns.

This powder was applied to a steel substrate using an electrostatic spray gun and cured at the recommended storing schedule for "Interpon D". A smooth pink coating, homogeneous to the eye, was produced.

In Example 5 the white milled powder was replaced by 50 g blue milled powder; the process of Example 4 was otherwise repeated exactly. The particle size of the agglomerated product was similar to that of the product of Example 4 and it could be applied to a substrate and used to form a smooth, visually homogeneous, purple coating.

## Claims

1. A coloured powder coating composition consisting of solid particles, characterised in that it is a mixture of particles of at least two different colours and optionally uncoloured particles, each particle comprising a solid polymeric binder system and in the case of coloured particles also at least one colouring agent, the size of substantially all the particles having their largest dimension below 20 microns, such that when the powder coating composition is applied to a substrate and heated to form a continuous coating the differences in colour in the cured powder coating arising from the different coloured particles cannot be discerned by the human eye.

2. A coloured powder coating composition according to claim 1, wherein the maximum dimension of at least 99% by weight of the particles is in the range 0.5 to 15 microns.

3. A coloured powder coating composition according to claim 1 or claim 2, wherein the size of substantially all the particles is below 10 microns in the largest dimension.

4. A coloured powder coating composition according to claim 3, wherein the size of substantially all the particles is in the range of 1.5 to 10 microns in the largest dimension.

5. A coloured powder coating composition according to claim 3 or claim 4, wherein the size of substantially all the particles is below 5 microns in the largest dimension.

6. A coloured powder coating composition according to any one of claims 1 to 5, wherein the mean particle size of the solid particles is in the range of 1.5 to 4 microns.

7. A coloured powder coating composition according to any one of claims 1 to 6, wherein the solid polymeric binder system comprises a thermosetting resin.

8. A coloured powder coating composition according to any one of claims 1 to 7, and wherein the particles are agglomerated into composite particles such that the composition is air fluidisable and can be applied to the substrate by electrostatic spray.

9. A coloured powder coating composition according to any one of claims 1 to 7, wherein the particles are agglomerated into composite particles of mean particle size 15 to 75 microns, the composite particles each comprising a mixture of particles of at least two different colours.

10. A coloured powder coating composition according to claim 8 or claim 9, wherein the composite particles have mean particle size in the range of 25 to 50 microns.

11. A coloured powder coating composition according to claim 10, wherein the different coloured particles are mixed in the composite particles in an arrangement which has a more perfect alternation of the different coloured particles than does a random mixture.

12. A process for the preparation of a coloured powder coating composition in a desired colour, characterised by providing powder coating compositions in at least two basic colours, optionally together with an uncoloured powder coating composition, each composition consisting of solid particles and each particle comprising a solid polymeric binder system, the particles of each of the basic colour compositions also containing at least one colouring agent, and wherein substantially all the particles have their largest dimension below 20 microns, and mixing the powder coating compositions, wherein the particle sizes and proportions of the compositions mixed are such that when applied to a substrate and heated to form a continuous coating a film of the desired colour is formed in which the differences in colour arising from the different particles cannot be discerned by the human eye.

13. A process according to claim 12, wherein the powder coating compositions are comminuted to a particle size such that the maximum dimension of at least 99% by weight of the particles is in the range 0.5 to 15 microns.

14. A process according to claim 12 or claim 13, wherein the compositions are comminuted to a particle size such that substantially all the particles have their largest dimension below 10 microns and are simultaneously mixed in proportions selected to give a coloured powder coating composition which when applied to a substrate and heated to form a continuous coating forms a film of the desired colour.

15. A process according to claim 13 or claim 14, wherein the size of substantially all the particles is in the range of 1.5 to 10 microns in the largest dimension.

16. A process according to any one of claims 12 to 15, wherein the mixed particles are agglomerated to produce composite particles of mean particle size 15 to 75 microns.

17. A process according to claim 16, wherein the powder coating compositions in basic colours and optional uncoloured composition if present are mixed as dry powders, and a solution of a granulating agent is added to the mixed powder to agglomerate the particles, or the particles are subjected to mechanical forces sufficient to cause agglomeration of particles by fusion.

18. A process according to claim 16, wherein the powder coating compositions in basic colours are dispersed together in a liquid dispersion medium and the dispersion is dried under conditions causing agglomeration.

19. A process according to any one of claims 12, 13 and 15, wherein the compositions are mixed and agglomerated by an electrostatic mixing technique in which a powder coating composition in a first basic colour is electrically charged and a powder coating composition in a second basic colour is not so charged or is charged to a different potential and the powders are mixed to form composite particles of mean particle size 25 to 75 microns, which when applied to a substrate and heated to form a continuous coating form a film of the desired colour.

20. A component of a mixture according to any one of claims 1 to 7, which consists of particles of the same colour, for use in powder coating.

21. A process for the preparation of a component according to claim 20, for use in powder coating, characterised by providing a powder coating composition consisting of solid particles and each particle comprising a solid polymeric binder system and at least one colouring agent, and comminuting the composition to a particle size such that substantially all the particles have their largest dimension below 20 microns.

22. A kit for use in powder coating, comprising powder coating compositions in at least two basic colours, optionally together with an uncoloured powder coating composition, as separate components, each composition consisting of solid particles and each particle comprising a solid polymeric binder system, the particles of the basic colour compositions also containing at least one colouring agent, the compositions being of such a particle size that substantially all the particles have their largest dimension below 20 microns, such that if mixed by an electrostatic mixing technique in proportions selected to give a coloured powder coating composition and applied to a substrate and heated to form a continuous coating the differences in colour in the cured powder coating arising from the different particles cannot be discerned by the human eye.

23. A kit, for use in powder coating, which comprises at least two separate components which are coloured powder coating compositions of different colours according to claim 20, and optionally a further separate component which is a component of a mixture according to any one of claims 1 to 7, consisting of uncoloured particles.

24. A kit according to claim 22 or claim 23, which comprises three to ten differently coloured compositions as separate components.

25. Use of a powder coating component according to claim 20 or of a kit according to any one of claims 22 to 24 in a powder coating process.

26. A process for powder coating a substrate, characterised in that an agglomerated composition according to any one of claims 8 to 11 is applied to the substrate and heated to form a continuous coating.

27. A composition, component or kit according to any one of claims 1 to 11, 20 and 22 to 24, when used in a powder coating process.

## Patentansprüche

1. Farbige pulverförmige Überzugsmasse, bestehend aus festen Teilchen, dadurch gekennzeichnet, daß sie ein Gemisch von Teilchen von wenigstens zwei verschiedenen Farben und gegebenenfalls nichtfarbigen Teilchen darstellt, wobei jedes Teilchen ein festes polymeres Bindesystem und im Falle der farbigen Teilchen ferner wenigstens einen Farbstoff umfaßt, wobei die Größe im wesentlichen sämtlicher Teilchen ihre größte Ausdehnung unter 20 »m aufweist, so daß, wenn die pulverförmige Überzugsmasse auf ein Substrat aufgetragen und unter Bildung eines kontinuierlichen Überzugs erhitzt wird, die Unterschiede in der Farbe in dem gehärteten Pulverüberzug, die von den unterschiedlichen farbigen Teilchen herrühren, durch das menschliche Auge nicht unterschieden werden können.

2. Farbige pulverförmige Überzugsmasse nach Anspruch 1, worin die größtmögliche Ausdehnung von wenigstens 99 Gew.-% der Teilchen im Bereich von 0,5 bis 15 »m liegt.

3. Farbige pulverförmige Überzugsmasse nach Anspruch 1 oder Anspruch 2, worin die Größe von im wesentlichen sämtlichen Teilchen in der größten Ausdehnung unter 10 »m liegt.

4. Farbige pulverförmige Überzugsmasse nach Anspruch 3, worin die Größe von im wesentlichen sämtlichen Teilchen in der größten Ausdehnung im Bereich von 1,5 bis 10 »m liegt.

5. Farbige pulverförmige Überzugsmasse nach Anspruch 3 oder Anspruch 4, worin die Größe von im wesentlichen sämtlichen Teilchen in der größten Ausdehnung unter 5 »m liegt.

6. Farbige pulverförmige Überzugsmasse nach einem der Ansprüche 1 bis 5, worin die mittlere Teilchengröße der festen Teilchen im Bereich von 1,5 bis 4 »m liegt.

7. Farbige pulverförmige Überzugsmasse nach einem der Ansprüche 1 bis 6, worin das feste polymere Bindesystem ein Wärmehärtungsharz umfaßt.

8. Farbige pulverförmige Überzugsmasse nach einem der Ansprüche 1 bis 7, worin die Teilchen zu Verbundteilchen agglomeriert sind, so daß die Masse luftwirbelfähig ist und durch elektrostatisches Sprühen auf das Substrat aufgetragen werden kann.

9. Farbige pulverförmige Überzugsmasse nach einem der Ansprüche 1 bis 7, worin die Teilchen zu Verbundteilchen einer mittleren Teilchengröße von 15 bis 75 »m agglomeriert sind, wobei die Verbundteilchen jeweils ein Gemisch von Teilchen von wenigstens zwei verschiedenen Farben umfassen.

10. Farbige pulverförmige Überzugsmasse nach Anspruch 8 oder Anspruch 9, worin die Verbundteilchen eine mittlere Teilchengröße im Bereich von 25 bis 50 »m besitzen.

11. Farbige pulverförmige Überzugsmasse nach Anspruch 10, worin die unterschiedlichen farbigen Teilchen in den Verbundteilchen in einer Anordnung vermischt sind, die einen perfekteren Wechsel in den unterschiedlichen farbigen Teilchen aufweist als ein statistisches Gemisch.

12. Verfahren zur Herstellung einer farbigen pulverförmigen Überzugsmasse einer gewünschten Farbe, dadurch gekennzeichnet, daß pulverförmige Überzugsmassen in wenigstens zwei Grundfarben, gegebenenfalls zusammen mit einer nichtfarbigen pulverförmigen Überzugsmasse bereitgestellt werden, wobei jede Masse aus festen Teilchen besteht und jedes Teilchen ein festes polymeres Bindesystem umfaßt, wobei die Teilchen einer jeden der Grund-Farbmassen auch wenigstens einen Farbstoff enthalten und worin im wesentlichen sämtliche Teilchen ihre größte Ausdehnung unterhalb von 20 »m aufweisen, und daß die pulverförmigen Überzugsmassen vermischt werden, worin die Teilchengrößen und Anteile der gemischten Massen so sind, daß sich beim Auftragen auf ein Substrat und beim Erhitzen, um einen kontinuierlichen Überzug zu bilden, ein Film der gewünschten Farbe bildet, in dem die Unterschiede in der Farbe, die von den verschiedenen Teilchen herrühren, durch das menschliche Auge nicht unterschieden werden können.

13. Verfahren nach Anspruch 12, worin die pulverförmigen Überzugsmassen auf eine Teilchengröße pulverisiert werden, so daß die größtmögliche Ausdehnung von wenigstens 99 Gew.-% der Teilchen im Bereich von 0,5 bis 15 »m liegt.

14. Verfahren nach Anspruch 12 oder Anspruch 13, bei dem die Massen auf eine Teilchengröße pulverisiert werden, so daß im wesentlichen sämtliche Teilchen ihre größte Ausdehnung unterhalb von 10 »m aufweisen, und gleichzeitig in Anteilen vermischt werden, die ausgewählt werden, so daß sich eine farbige pulverförmige Überzugsmasse ergibt, die beim Auftragen auf ein Substrat und beim Erhitzen unter Bildung eines kontinuierlichen Überzugs einen Film der gewünschten Farbe bildet.

15. Verfahren nach Anspruch 13 oder Anspruch 14, bei dem die Größe in der größten Ausdehnung von im wesentlichen sämtlichen Teilchen im Bereich von 1,5 bis 10 »m liegt.

16. Verfahren nach einem der Ansprüche 12 bis 15, bei dem die gemischten Teilchen agglomeriert werden, um Verbundteilchen einer mittleren Teilchengröße von 15 bis 75 »m zu erzeugen.

17. Verfahren nach Anspruch 16, worin die pulverförmigen Überzugsmassen in den Grundfarben und gegebenenfalls die nichtfarbige Masse, sofern vorhanden, als trockene Pulver vermischt werden und eine Lösung eines Granulierungsmittels zu dem Pulvergemisch zugegeben wird, um die Teilchen zu agglomerieren, oder bei dem die Teilchen mechanischen Kräften unterzogen werden, die ausreichen, so daß es zu einer Agglomeration der Teilchen durch Verschmelzen kommt.

18. Verfahren nach Anspruch 16, bei dem die pulverförmigen Überzugsmassen in den Grundfarben zusammen in einem flüssigen Dispersionsmedium dispergiert werden und die Dispersion unter Bedingungen getrocknet wird, die zur Agglomeration führen.

19. Verfahren nach einem der Ansprüche 12, 13 und 15, bei dem die Massen durch eine elektrostatische Mischtechnik gemischt und agglomeriert werden, bei dem eine pulverförmige Überzugsmasse in einer ersten Grundfarbe elektrisch geladen wird und eine pulverförmige Überzugsmasse in einer zweiten Grundfarbe nicht so geladen wird oder auf ein unterschiedliches Potential geladen wird und die Pulver unter Bildung von Verbundteilchen einer mittleren Teilchengröße von 25 bis 75 »m gemischt werden, die beim Auftragen auf ein Substrat und beim Erhitzen, um einen kontinuierlichen Überzug zu bilden, einen Film der gewünschten Farbe bilden.

20. Komponente eines Gemisches nach einem der Ansprüche 1 bis 7, die aus Teilchen derselben Farbe zur Verwendung beim Pulverbeschichten besteht.

21. Verfahren zur Herstellung einer Komponente nach Anspruch 20 zur Verwendung beim Pulverbeschichten, dadurch gekennzeichnet, daß eine pulverförmige Überzugsmasse, bestehend aus festen Teilchen, bereitgestellt wird und daß jedes Teilchen ein festes polymeres Bindesystem und wenigstens einen Farbstoff umfaßt und daß die Masse auf eine Teilchengröße pulverisiert wird, daß im wesentlichen sämtliche Teilchen ihre größte Ausdehnung unterhalb von 20 »m aufweisen.

22. Ausstattungssatz zur Verwendung beim Pulverbeschichten, umfassend pulverförmige Überzugsmassen in wenigstens zwei Grundfarben, gegebenenfalls zusammen mit einer unfarbigen pulverförmigen Überzugsmasse als getrennte Komponenten, wobei jede Masse aus festen Teilchen besteht und jedes Teilchen ein festes polymeres Bindesystem umfaßt, wobei die Teilchen der Grundfarben-Massen auch wenigstens einen Farbstoff enthalten und die Massen von einer solchen Teilchengröße sind, daß im wesentlichen sämtliche Teilchen ihre größte Ausdehnung unterhalb von 20 »m aufweisen, so daß beim Mischen durch eine elektrostatische Mischtechnik in Anteilen, die ausgewählt werden, um eine farbige pulverförmige Überzugsmasse zu ergeben, und falls sie auf ein Substrat aufgetragen und erhitzt werden, um einen kontinuierlichen Überzug zu bilden, die Unterschiede in der Farbe in dem gehärteten pulverförmigen Überzug, die von den unterschiedlichen Teilchen herrühren, durch das menschliche Auge nicht unterschieden werden können.

23. Ausstattungssatz zur Verwendung beim Pulverbeschichten, umfassend wenigstens zwei getrennte Komponenten, die farbige pulverförmige Überzugsmassen von unterschiedlichen Farben gemäß Anspruch 20 darstellen, und der gegebenenfalls eine weitere getrennte Komponente umfaßt, die eine Komponente eines Gemisches nach einem der Ansprüche 1 bis 7 darstellt und aus nichtfarbigen Teilchen besteht.

24. Ausstattungssatz nach Anspruch 22 oder 23, welcher drei bis zehn unterschiedlich farbige Massen als getrennte Komponenten aufweist.

25. Verwendung einer pulverförmigen Überzugskomponente nach Anspruch 20 oder eines Ausstattungssatzes nach einem der Ansprüche 22 bis 24 bei einem Pulverbeschichtungsverfahren.

26. Verfahren zum Pulverbeschichten eines Substrats, dadurch gekennzeichnet, daß eine agglomerierte Masse nach einem der Ansprüche 8 bis 11 auf das Substrat aufgetragen und unter Bildung eines kontinuierlichen Überzugs erhitzt wird.

27. Masse, Komponente oder Ausstattungssatz nach einem der Ansprüche 1 bis 11, 20 und 22 bis 24 zur Verwendung bei einem Pulverbeschichtungsverfahren.

## Revendications

1. Composition de revêtement en poudre colorée constituée de particules solides, caractérisée en ce qu'elle est constituée d'un mélange de particules d'au moins deux couleurs différentes et, éventuellement, de particules incolores, chaque particule comportant un système de liant polymère solide et aussi au moins un agent colorant dans le cas de particules colorées, la taille de pratiquement toutes les particules étant inférieure à 20 microns dans leur plus grande dimension, de telle sorte que lorsque la composition de revêtement en poudre est appliquée sur un substrat et chauffée pour former un revêtement continu, les différences de couleurs dans le revêtement de poudre cuit provenant des particules de différentes couleurs ne puissent pas être perçues par l'oeil humain.

2. Composition de revêtement en poudre colorée selon la revendication 1, dans laquelle la dimension maximale d'au moins 99 % en poids des particules se situe entre 0,5 et 15 microns.

3. Composition de revêtement en poudre colorée selon la revendication 1 ou la revendication 2, dans laquelle la taille de pratiquement toutes les particules est inférieure à 10 microns dans leur plus grande dimension.

4. Composition de revêtement en poudre colorée selon la revendication 3, dans laquelle la taille de pratiquement toutes les particules se situe entre 1,5 et 10 microns dans leur plus grande dimension.

5. Composition de revêtement en poudre colorée selon la revendication 3 ou la revendication 4, dans laquelle la taille de pratiquement toutes les particules est inférieure à 5 microns dans leur plus grande dimension.

6. Composition de revêtement en poudre colorée selon l'une quelconque des revendications 1 à 5, dans laquelle la taille moyenne des particules solides se situe entre 1,5 et 4 microns.

7. Composition de revêtement en poudre colorée selon l'une quelconque des revendications 1 à 6, dans laquelle le système de liant polymère solide comprend une résine thermodurcissable.

8. Composition de revêtement en poudre colorée selon l'une quelconque des revendications 1 à 7, dans laquelle les particules sont agglomérées en particules composites de telle sorte que la composition puisse être fluidisée à l'air et appliquée sur le substrat par pulvérisation électrostatique.

9. Composition de revêtement en poudre colorée selon l'une quelconque des revendications 1 à 7, dans laquelle les particules sont agglomérées en particules composites d'une taille moyenne de particule comprise entre 15 et 75 microns, les particules composites comprenant chacune un mélange de particules d'au moins deux couleurs différentes.

10. Composition de revêtement en poudre colorée selon la revendication 8 ou la revendication 9, dans laquelle les particules composites ont une taille moyenne de particule comprise entre 25 et 50 microns.

11. Composition de revêtement en poudre colorée selon la revendication 10, dans laquelle les particules de différentes couleurs sont mélangées aux particules composites selon une configuration présentant une alternance des particules de différentes couleurs plus parfaite que ce que l'on obtiendrait par un mélange aléatoire.

12. Procédé de préparation d'une composition de revêtement en poudre colorée dans une couleur désirée, caractérisé en ce que l'on alimente des compositions de revêtement en poudre en deux couleurs de base au moins, éventuellement mélangées à une composition de revêtement en poudre incolore, chaque composition étant constituée de particules solides et chaque particule comportant un système de liant polymère solide, les particules de chacune des compositions de couleur de base contenant aussi au moins un agent colorant, et où la taille de pratiquement toutes les particules est inférieure à 20 microns dans leur plus grande dimension, et en ce que l'on mélange les compositions de revêtement en poudre, où les tailles et les proportions des particules des compositions mélangées sont telles que, quand elles sont appliquées sur un substrat et chauffées pour former un revêtement continu, il se forme une pellicule de la couleur désirée dans laquelle les différences de couleur provenant des différentes particules ne peuvent pas être perçues par l'oeil humain.

13. Procédé selon la revendication 12, dans lequel les compositions de revêtement en poudre sont pulvérisées jusqu'à une taille de particule telle que la dimension maximale d'au moins 99 % en poids des particules se situe entre 0,5 et 15 microns.

14. Procédé selon la revendication 12 ou la revendication 13, dans lequel les compositions sont pulvérisées jusqu'à une taille de particule telle que pratiquement toutes les particules ont leur plus grande dimension inférieure à 10 microns et sont simultanément mélangées dans des proportions choisies pour donner une composition de revêtement en poudre colorée qui, quand elle est appliquée sur un substrat et chauffée pour former un revêtement continu, forme une pellicule de la couleur désirée.

15. Procédé selon la revendication 13 ou la revendication 14, dans lequel la taille de pratiquement toutes les particules est comprise entre 1,5 et 10 microns dans leur plus grande dimension.

16. Procédé selon l'une quelconque des revendications 12 à 15, dans lequel les particules mélangées sont agglomérées pour produire des particules composites d'une taille moyenne de particule comprise entre 15 et 75 microns.

17. Procédé selon la revendication 16, dans lequel les compositions de revêtement en poudre dans les couleurs de base et la composition incolore éventuelle, si elle est présente, sont mélangées sous forme de poudres sèches, et une solution d'agent granulateur est ajoutée à la poudre mélangée pour agglomérer les particules, ou les particules sont soumises à des forces mécaniques suffisantes pour provoquer une agglomération des particules par fusion.

18. Procédé selon la revendication 16, dans lequel les compositions de revêtement en poudre dans les couleurs de base sont dispersées ensemble dans un milieu de dispersion liquide et la dispersion est séchée dans des conditions provoquant l'agglomération.

19. Procédé selon l'une quelconque des revendications 12, 13 et 15, dans lequel les compositions sont mélangées et agglomérées par une technique de mélange électrostatique selon laquelle une composition de revêtement en poudre d'une première couleur de base est électriquement chargée et une composition de revêtement en poudre d'une seconde couleur de base n'est pas aussi chargée ou est chargée d'un potentiel différent, les poudres étant ensuite mélangées pour former des particules composites d'une taille moyenne de particule de 25 à 75 microns qui, quand elles sont appliquées sur un substrat et chauffées pour former un revêtement continu, forment une pellicule de la couleur désirée.

20. Composant d'un mélange selon l'une quelconque des revendications 1 à 7, constitué de particules de la même couleur, destiné à être utilisé dans un revêtement en poudre.

21. Procédé pour la préparation d'un composant selon la revendication 20, destiné à être utilisé dans un revêtement en poudre, dans lequel on alimente une composition de revêtement en poudre constituée de particules solides où chaque particule comporte un système de liant polymère solide et au moins un agent colorant, et on pulvérise la composition jusqu'à une taille de particule telle que pratiquement toutes les particules ont leur plus grande dimension inférieure à 20 microns.

22. Kit destiné à être utilisé dans un revêtement en poudre, comprenant, comme composants séparés, des compositions de revêtement en poudre en au moins deux couleurs de base, éventuellement associées à une composition de revêtement en poudre incolore, chaque composition étant constituée de particules solides et chaque particule comportant un système de liant polymère solide, les particules des compositions en couleurs de base contenant aussi au moins un agent colorant, les compositions étant composées de particules d'une taille telle que pratiquement toutes les particules ont leur plus grande dimension inférieure à 20 microns de telle sorte que, lorsqu'elles sont mélangées par une technique de mélange électrostatique dans des proportions choisies pour donner une composition de revêtement en poudre colorée, et qu'elles sont appliquées sur un substrat et chauffées pour former un revêtement continu, les différences de couleurs dans le revêtement en poudre cuit provenant des différentes particules ne puissent être perçues par l'oeil humain.

23. Kit destiné à être utilisé dans un revêtement en poudre, comprenant au moins deux composants séparés qui sont des compositions de revêtement en poudre colorées de différentes couleurs selon la revendication 20, et éventuellement un composant séparé supplémentaire qui est un composant d'un mélange selon l'une quelconque des revendications 1 à 7, constitué de particules incolores.

24. Kit selon la revendication 22 ou la revendication 23, comprenant, comme composants séparés, de trois à dix compositions différemment colorées.

25. Utilisation d'un composant de revêtement en poudre selon la revendication 20 ou d'un kit selon l'une quelconque des revendications 22 à 24 dans un procédé de revêtement en poudre.

26. Procédé pour réaliser le revêtement en poudre d'un substrat, dans lequel une composition agglomérée selon l'une quelconque des revendications 8 à 11 est appliquée sur le substrat et chauffée pour former un revêtement continu.

27. Composition, composant ou kit selon l'une quelconque des revendications 1 à 11, 20 et 22 à 24, quand ils sont utilisés dans un procédé de revêtement en poudre.
